# FASCICULE DE BREVET EUROPEEN

(11) **EP 1 534 567 B1**
(45) Date de publication et mention de la délivrance du brevet: **30.07.2014**
(21) Numéro de dépôt: 03756521.5
(22) Date de dépôt: 31.07.2003
(51) Int. Cl.: B60T 7/10, G05G 9/02, B62D 1/12

(54) **DISPOSITIF DE COMMANDE DE L'ACCELERATION ET DU FREINAGE POUR VEHICULE**
BESCHLEUNIGUNGS- UND BREMSWERTGEBER FÜR KRAFTFAHRZEUGE
ACCELERATION AND BRAKING CONTROL DEVICE FOR VEHICLE

(30) Priorité: 05.09.2002 FR 0210983
(43) Date de publication de la demande: 01.06.2005
(73) Titulaire: Renault Trucks SAS, 69806 Saint Priest (FR)
(72) Inventeur: CRAVE, Philippe, F-69002 LYON (FR); DECHAMP, François, F-71250 CLUNY (FR)
(74) Mandataire: Putet, Gilles
(86) Numéro de dépôt international: PCT/FR2003/002430
(87) Numéro de publication internationale: WO 2004/022393

(56) Documents cités:
- DE-A- 4 404 594
- DE-A- 10 041 178
- DE-A- 10 062 505
- DE-C- 19 625 502

## Description

### Domaine technique

L'invention se rattache au domaine de l'automobile, au sens large, et peut être appliquée notamment aux véhicules industriels mais également sur des voitures particulières. Elle concerne plus spécifiquement un système de commande de l'accélération et du freinage au moyen d'un manipulateur unique. L'invention concerne plus spécifiquement des dispositions de ce type de système de commande destinées à améliorer l'ergonomie de fonctionnement.

### Techniques antérieures

De façon générale, de nombreuses solutions sont étudiées pour remplacer les systèmes de commande mécaniques des différentes fonctions au sein d'un véhicule industriel. Ainsi, on a déjà proposé de remplacer la colonne de direction mécanique d'un véhicule par un circuit de commande électrique ou électro-hydraulique qui, en fonction d'une information représentative d'un angle de rotation du volant provoque une modification de l'angle de braquage des roues directrices.

On a également proposé de remplacer la commande d'accélération, effectuée traditionnellement par un câble reliant une pédale au système de carburation, par un manipulateur relié à un calculateur électronique responsable de la commande adéquate de l'accélération. Plus précisément, l'angle d'inclinaison vers l'avant de ce manipulateur est représentatif de la consigne d'accélération demandée.

Il a également été proposé d'utiliser ce même manipulateur pour générer les commandes de freinage, en remplacement donc d'un circuit de commande traditionnel hydraulique. Ainsi, l'inclinaison vers l'arrière d'un tel manipulateur est représentatif de la consigne de freinage demandée par le conducteur. Cette inclinaison vers l'arrière est mesurée par un capteur adéquate, relié à un calculateur responsable de l'application d'un effort de freinage.

Des exemples d'un tel manipulateur sont décrits dans les documents GB 2 218 187, WO 01/76932 et DE 19625502.

On conçoit que ce type de manipulateur présente certains défauts d'ergonomie, notamment lorsque le conducteur doit effectuer des arrêts fréquents, et par exemple lorsqu'il se déplace en ville. En effet, pour les phases d'accélération, le conducteur doit incliner le manipulateur vers l'avant, puis, pour stopper son véhicule, il doit imposer une consigne de freinage ou de décélération en inclinant le manipulateur dans le sens opposé, au-delà de la position neutre. Or, lorsque le véhicule est arrêté, par exemple à un feu de circulation, il n'est pas très confortable pour le conducteur d'avoir à maintenir une consigne de freinage pendant la durée du feu.

En effet, le conducteur peut avoir besoin d'effectuer certains réglages sur son poste de conduite et on conçoit donc qu'il lui sera utile de pouvoir bénéficier d'une main libre en relâchant le manipulateur de commande. Or s'il relâche ce manipulateur, celui-ci se replace en position neutre, c'est-à-dire dans une position où il n'exerce une commande ni d'accélération ni de freinage. Si le véhicule se trouve en légère pente, cette situation n'est bien entendu pas satisfaisante, puisque le véhicule va alors se mettre à avancer sous l'effet de son propre poids.

On notera que cet inconvénient est propre à l'utilisation d'un manipulateur recevant une action manuelle du conducteur, puisque dans les solutions traditionnelles à pédalier, le maintien de l'effort de freinage s'effectue au moyen d'une pédale, laissant donc le conducteur libre de lâcher son volant et d'utiliser ses mains lorsque le véhicule est arrêté.

Le problème que se propose de résoudre l'invention est celui de permettre au conducteur d'avoir les mains libres tout en conservant une commande de freinage lorsque le véhicule est à l'arrêt, comme par exemple pendant la durée d'un feu de circulation.

### Exposé de l'invention

L'invention concerne donc un véhicule automobile tel qu'une voiture particulière ou un véhicule industriel, qui est équipé d'un dispositif de commande de l'accélération et du freinage au moyen d'un manipulateur. Plus précisément, l'inclinaison de ce manipulateur selon une direction et dans un sens déterminé par rapport à une position neutre, génère une consigne d'accélération, l'inclinaison du manipulateur dans le sens opposé générant une consigne de freinage.

Conformément à l'invention, ce véhicule se caractérise en ce qu'il comporte également :
■ des moyens de maintien de la consigne de freinage qui, sans intervention du conducteur, maintiennent la consigne de freinage à une valeur non nulle lorsque le manipulateur repasse en position neutre, après être resté en position de freinage, alors que la vitesse du véhicule était nulle ;
■ des moyens d'annulation postérieure de la consigne de freinage, sur action du conducteur.

Autrement dit, l'invention consiste à prolonger le freinage ayant conduit la décélération par un freinage automatique assimilable à un freinage de stationnement qui s'enclenche sans intervention du conducteur, autorisant ainsi ce dernier à relâcher le manipulateur et donc de profiter de sa main libre.

En d'autres termes, le freinage du véhicule est maintenu pour l'immobiliser, afin de dispenser le conducteur de maintenir une action sur la commande de freinage.

Bien entendu, le maintien de la consigne de freinage s'entend de préférence par la conservation d'un effort minimum de la part du système de frein de service, mais elle couvre également d'autres variantes non illustrées dans lesquelles un système de frein complémentaire, assimilable à un frein de stationnement serait enclenché automatiquement après relâchement du manipulateur.

La sortie du mode de freinage "automatique" ne peut pas s'effectuer sans que le conducteur ne l'ait positivement autorisée, en effectuant une action particulière. On évite ainsi que le véhicule ne sorte d'un état de freinage automatique de façon inopinée, avec des risques sur la sécurité du véhicule et de son voisinage.

En pratique, le maintien de la consigne de freinage et donc l'actionnement automatique du frein peut se déclencher de différentes manières, dès lors que le manipulateur est en position de freinage et que la vitesse du véhicule est nulle.

Ainsi, ce maintien peut s'enclencher lorsque la vitesse du véhicule est demeurée nulle pendant une durée prédéterminée, signifiant que la volonté du conducteur est effectivement d'immobiliser le véhicule temporairement.

Cet enclenchement automatique du frein peut s'effectuer également lorsque l'inclinaison du manipulateur dans le sens du freinage dépasse un seuil prédéterminé, ce qui correspond à une consigne de freinage supérieure à une valeur prédéterminée. Dans une variante de réalisation, l'enclenchement automatique du frein peut s'effectuer lorsqu'en outre une action est réalisée par le conducteur sur un interrupteur ou tout organe analogue. Il peut par exemple s'agir d'un interrupteur lui-même situé sur le manipulateur ou en tout autre endroit du poste de conduite.

A l'inverse, l'annulation de la consigne de freinage, et donc la sortie du mode de freinage automatique peut se faire selon différentes méthodes.

Ainsi, l'annulation de la consigne de freinage peut être activée par une action du conducteur sur un organe monté sur manipulateur, ou de façon plus générale dans un endroit accessible du poste de conduite. Cette annulation peut également être assujettie à des moyens permettant de détecter la présence du conducteur dans le poste de conduite, afin d'éviter tout désenclenchement inopiné.

On peut également prévoir que l'annulation de la consigne de freinage soit activée après que le manipulateur réalise une séquence combinant une commande d'accélération et de freinage. Plus précisément, ce désenclenchement peut être activé après que l'inclinaison du manipulateur dans le sens du freinage dépasse un seuil prédéterminé, puis que l'inclinaison du manipulateur indique une commande d'accélération.

Bien entendu, l'ensemble de ces différentes conditions peut être combiné en tout ou partie pour obtenir un fonctionnement ergonomique qui conserve un haut niveau de sécurité.

### Description sommaire des figures

La manière de réaliser l'invention ainsi que les avantages qui en découlent ressortiront bien de la description du mode de réalisation qui suit, à l'appui de l'unique figure annexée qui est un schéma explicatif du système de commande et de freinage conforme à l'invention.

### Manière de réaliser l'invention

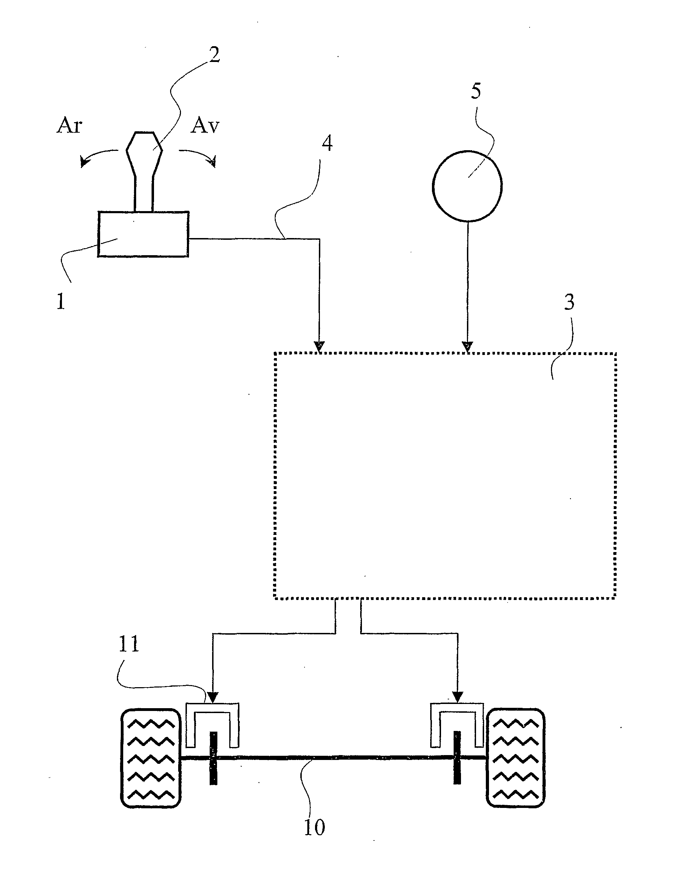

La figure 1 illustre un schéma de fonctionnement des systèmes de commande conformes à l'invention dans lequel on note la présence du manipulateur (1), équipé d'une poignée (2) apte à se déplacer dans une direction, et selon deux sens illustré par les flèches Av, Ar. Ce manipulateur délivre un ou plusieurs signaux représentatifs de l'inclinaison de la poignée (2), à destination d'un calculateur (3), par l'intermédiaire d'une liaison filaire (4) ou d'un bus de communication entre calculateurs, ou bien encore par tout autre média de communication.

Le calculateur reçoit également l'information de vitesse du véhicule élaboré par un capteur de vitesse ou tachymètre (5), également relié au calculateur, soit par liaison spécifique filaire, soit par un bus de communication.

Le calculateur délivre à destination du sous-ensemble moteur différents signaux ou ordres permettant d'assurer l'accélération demandée par le conducteur grâce au manipulateur.

Pour assurer la décélération du véhicule, le conducteur utilise le manipulateur (1) en pivotant la poignée dans le sens opposé, selon la flèche Ar, ce qui provoque l'élaboration par le calculateur (3) d'ordres de freinage à destination des actionneurs associés au système de freinage (11) de l'essieu (10). Ces ordres de freinage peuvent être destinés à commander directement les actionneurs, ou bien encore à les commander par l'intermédiaire de sous-ensembles particuliers, ou bien encore grâce à un calculateur spécifique à la fonction de freinage.

Plus précisément, l'invention concerne les phases de fonctionnement dans lesquelles après décélération totale, le véhicule se trouve à l'arrêt. Dans ce cas, dès lors que l'arrêt est détecté par le capteur de vitesse (5), le calculateur maintien une consigne de freinage, et génère des ordres de commande même après que le manipulateur soit sorti d'une position de freinage.

Plus précisément, cet actionnement automatique du frein peut avoir lieu dès lors que le véhicule est arrêté, que le manipulateur (1) est en position de freinage, et ce pendant une durée dépassant un seuil prédéterminé, de l'ordre d'une ou quelque seconde. Cette temporisation est réalisée au sein même du calculateur (3).

Cet enclenchement du freinage de stationnement automatique peut nécessiter également que le manipulateur soit conservé dans une position de freinage, au-delà d'une inclinaison minimum, correspondant à un effort de freinage supérieur à un seuil donné, pendant une durée prédéterminée.

Toutefois, cette dernière condition correspond à une méthode particulière du traitement de cette phase de freinage, mais n'est en aucun cas obligatoire.

L'enclenchement automatique du frein peut également s'obtenir lorsque le véhicule est arrêté, que le manipulateur est conservé dans une position de freinage, et que le conducteur effectue une action particulière, par exemple sur un interrupteur ou tout autre bouton poussoir accessible au conducteur. Dans un cas particulier, cet interrupteur se trouve directement sur la poignée du manipulateur.

Dès lors, le véhicule reste immobilisé, puisque le système de freinage demeure activé, bien que le conducteur ait relâché le manipulateur qui est donc revenu en position neutre.

La sortie du mode de freinage automatique peut s'effectuer selon différents modes de fonctionnement.

Ainsi, dans une première variante de réalisation, la consigne de freinage peut être ramenée à une valeur nulle, lorsque le conducteur actionne le manipulateur (1) pour obtenir une accélération, et qu'il effectue une action de confirmation sur un interrupteur ou assimilé. Ceci évite que la consigne de freinage soit annulée de façon inopinée alors que par exemple le manipulateur a simplement été heurté de façon involontaire et est passé transitoirement dans une position d'accélération.

Dans une autre variante de réalisation, la consigne de freinage peut être annulée lorsque le chauffeur actionne le manipulateur dans le sens du freinage, au-delà d'un seuil prédéterminé, puis qu'il relâche ensuite le manipulateur pour passer en position d'accélération.

Dans une autre variante de réalisation, le passage du manipulateur (1) en position d'accélération peut provoquer l'annulation de la consigne de freinage. Dans ce cas, pour éviter tout déplacement inopiné du véhicule, on préférera que la transmission soit alors réglée à un très faible rapport autorisant qu'un roulage à très faible vitesse. Le passage en mode normal, avec une augmentation des rapports avec l'accélération pourra se faire en détectant un mouvement complémentaire du manipulateur, éventuellement après un passage par la position neutre.

Dans cette dernière variante de réalisation, on préférera également assujettir cette annulation de la consigne de freinage à une information relative à la présence du conducteur au poste de conduite, et notamment des capteurs d'ouverture de portières, ou de pression sur son siège entre autres.

Il ressort de ce qui précède que le véhicule conforme à l'invention présente l'avantage majeur de dispenser de manière automatique le conducteur d'une action permanente sur le manipulateur de freinage lors d'un arrêt de courte durée.

## Revendications

1. Véhicule automobile équipé d'un dispositif de commande de l'accélération et du freinage au moyen d'un manipulateur (1) dont l'inclinaison selon une direction et dans un sens (Av) par rapport à une position neutre correspond à une consigne d'accélération, et dont l'inclinaison dans le sens opposé (Ar) correspond à une consigne de freinage, **caractérisé en ce qu'**il comporte également :
• des moyens de maintien de la consigne de freinage qui, sans intervention du conducteur, permettant de maintenir la consigne de freinage à une valeur non nulle lorsque le manipulateur (1) repasse en position neutre, après être resté en position de freinage, et alors que la vitesse du véhicule était nulle,
• des moyens d'annulation postérieure de la consigne de freinage sur action du conducteur.

2. Véhicule automobile selon la revendication 1, **caractérisé en ce que** les moyens de maintien de la consigne de freinage sont activés, lorsque la vitesse du véhicule est demeurée nulle, pendant une durée prédéterminée.

3. Véhicule automobile selon la revendication 1, **caractérisé en ce que** les moyens de maintien de la consigne de freinage sont activés lorsque l'inclinaison du manipulateur dans le sens du freinage dépasse un seuil prédéterminé.

4. Véhicule automobile selon la revendication 1, **caractérisé en ce que** les moyens de maintien de la consigne de freinage sont activés lorsqu'en outre une action est réalisée sur un interrupteur ou analogue accessible au conducteur.

5. Véhicule automobile selon la revendication 1, **caractérisé en ce que** les moyens d'annulation de la consigne de freinage sont activés par une action sur un organe monté sur le manipulateur.

6. Véhicule automobile selon la revendication 1, **caractérisé en ce que** les moyens d'annulation de la consigne de freinage sont activés en fonction de moyens permettant de détecter la présence d'un conducteur au poste de conduite.

7. Véhicule automobile selon la revendication 1, **caractérisé en ce que** les moyens d'annulation de la consigne de freinage sont activés après que l'inclinaison du manipulateur dans le sens du freinage dépasse un seuil prédéterminé, puis que l'inclinaison du manipulateur indique une commande d'accélération.

## Patentansprüche

1. Kraftfahrzeug, das mit einer Vorrichtung zur Steuerung der Beschleunigung und des Bremsens mittels einer Betätigungseinrichtung (1) ausgestattet ist, deren Neigung gemäß einer Richtung und in einer Richtung (Av) bezüglich einer Neutralposition einem Beschleunigungssollwert entspricht, und deren Neigung in die entgegengesetzte Richtung (Ar) einem Bremssollwert entspricht,
**dadurch gekennzeichnet, dass** sie außerdem umfasst:
• Einrichtungen zur Aufrechterhaltung des Bremssollwerts, die es ohne Eingreifen des Fahrers erlauben, den Bremssollwert auf einem Wert zu halten, der nicht null ist, wenn die Betätigungseinrichtung (1) in die Neutralposition zurückkehrt, nachdem sie in der Bremsposition geblieben war, und während die Fahrzeuggeschwindigkeit null war, und
• Einrichtungen zum nachfolgenden Annullieren des Bremswerts durch Einwirken des Fahrers.

2. Kraftfahrzeug nach Anspruch 1, **dadurch gekennzeichnet, dass** die Einrichtungen zur Aufrechterhaltung des Bremssollwerts aktiviert werden, wenn die Geschwindigkeit des Fahrzeugs über eine vorbestimmte Zeitdauer null geblieben ist.

3. Kraftfahrzeug nach Anspruch 1, **dadurch gekennzeichnet, dass** die Einrichtungen zur Aufrechterhaltung des Bremssollwerts aktiviert werden, wenn die Neigung der Betätigungseinrichtung in Bremsrichtung einen vorbestimmten Schwellenwert überschreitet.

4. Kraftfahrzeug nach Anspruch 1, **dadurch gekennzeichnet, dass** die Einrichtungen zur Aufrechterhaltung des Bremssollwerts aktiviert werden, wenn außerdem ein Einwirken auf einen dem Fahrer zugänglichen Schalter oder dergleichen durchgeführt wird.

5. Kraftfahrzeug nach Anspruch 1, **dadurch gekennzeichnet, dass** die Einrichtungen zum Annullieren des Bremssollwerts durch ein Einwirken auf ein auf der Betätigungseinrichtung montiertes Teil aktiviert werden.

6. Kraftfahrzeug nach Anspruch 1, **dadurch gekennzeichnet, dass** die Einrichtungen zum Annullieren des Bremssollwerts in Abhängigkeit von Einrichtungen aktiviert werden, die das Erfassen der Anwesenheit eines Fahrers im Führerstand erlauben.

7. Kraftfahrzeug nach Anspruch 1, **dadurch gekennzeichnet, dass** die Einrichtungen zum Annullieren des Bremssollwerts aktiviert werden, nachdem die Neigung der Betätigungseinrichtung in Bremsrichtung einen vorbestimmten Wert überschritten hat, woraufhin die Neigung der Betätigungseinrichtung einen Beschleunigungsbefehl anzeigt.

## Claims

1. Motor vehicle equipped with a device for controlling acceleration and braking by means of a control lever (1) whose the inclination in one direction and in one sense (Av) with respect to a neutral position corresponds to an acceleration instruction, and whose the inclination in the opposite sense (Ar) corresponds to a braking instruction, **characterized in that** it also comprises:
• means for maintaining the braking instruction which, without intervention on the part of the driver, allow the braking instruction to be maintained at a non-zero value when the control lever (1) returns to the neutral position, after having stayed in the braking position, and while the speed of the vehicle was zero,
• means for subsequently cancelling the braking instruction upon action on the part of the driver.

2. Motor vehicle according to Claim 1, **characterized in that** the means for maintaining the braking instruction are activated, when the speed of the vehicle has remained zero, for a predetermined length of time.

3. Motor vehicle according to Claim 1, **characterized in that** the means for maintaining the braking instruction are activated when the inclination of the control lever in the braking sense exceeds a predetermined threshold.

4. Motor vehicle according to Claim 1, **characterized in that** the means for maintaining the braking instruction are activated when in addition an action is performed on a switch or the like accessible to the driver.

5. Motor vehicle according to Claim 1, **characterized in that** the means for cancelling the braking instruction are activated by an action on a member mounted on the control lever.

6. Motor vehicle according to Claim 1, **characterized in that** the means for cancelling the braking instruction are activated on the basis of means able to detect the presence of a driver in the driver space.

7. Motor vehicle according to Claim 1, **characterized in that** the means for cancelling the braking instruction are activated after the inclination of the control lever in the braking sense exceeds a predetermined threshold, and then after the inclination of the control lever indicates a command to accelerate.
